# EUROPÄISCHE PATENTSCHRIFT

(11) **EP 4 345 246 B1**
(45) Veröffentlichungstag und Bekanntmachung des Hinweises auf die Patenterteilung: **04.03.2026**
(21) Anmeldenummer: 23198982.3
(22) Anmeldetag: 22.09.2023
(51) Int. Cl.: F01C 1/22, F01C 21/10

(54) **VERFAHREN ZUR HERSTELLUNG EINES GEHÄUSES SOWIE MANTELGEHÄUSE UND GEHÄUSE FÜR KREISKOLBENMOTOR**
METHOD FOR PRODUCING A HOUSING, AND SLEEVE HOUSING AND HOUSING FOR A ROTARY PISTON ENGINE
PROCÉDÉ DE FABRICATION D'UN BOÎTIER AINSI QUE BOÎTIER À CHEMISE ET CARTER POUR MOTEUR À PISTON ROTATIF

(30) Priorität: 29.09.2022 DE 102022210341
(43) Veröffentlichungstag der Anmeldung: 03.04.2024
(73) Patentinhaber: Knapp e-mobility GmbH, 70499 Stuttgart (DE)
(72) Erfinder: Knapp, Ulrich, 71686 Remseck (DE); Hartman, James, 71739 Oberriexingen (DE); Riegraf, Peter, 70734 Fellbach (DE)
(74) Vertreter: Patentanwälte Ruff, Wilhelm, Beier, Dauster & Partner mbB

(56) Entgegenhaltungen:
- DE-A1- 2 421 240
- GB-A- 1 443 928
- JP-A- S62 103 424

## Beschreibung

### ANWENDUNGSGEBIET UND STAND DER TECHNIK

Die Erfindung betrifft ein Verfahren zur Herstellung eines Gehäuses für einen Kreiskolbenmotor sowie ein Mantelgehäuse und ein Gehäuse für einen Kreiskolbenmotor.

Als Kreiskolbenmotor (kurz KKM) wird im Zusammenhang mit der Anmeldung ein Kreiskolbenmotor der Bauart Wankel umfassend einen bogig-dreieckigen Läufer, auch Rotor oder Kreiskolben oder kurz Kolben genannt, welcher in einem doppel-bogigen Mantelgehäuse umläuft. Eine Kontur des Mantelgehäuse weist zumindest im Wesentlichen die Form einer Epitrochoide auf. Das Mantelgehäuse wird auch als Trochoidgehäuse bezeichnet.

Ein Gehäuse für den Kreiskolbenmotoren umfasst üblicherweise weiter zwei beidseitig des Mantelgehäuses angeordnete Seitenteile. Der Läufer treibt bei seiner Bewegung eine Exzenterwelle an, auf welcher er gleichzeitig gelagert ist. Die Mittelachse der Exzenterwelle befindet sich auf der Mittelachse des Mantelgehäuses. An Spitzen oder Kolbenecken des Läufers sind Dichtleisten angeordnet, welche nach Möglichkeit permanent eine Wandung des Mantelgehäuses berühren, sodass drei unabhängige, wechselnd große Arbeitsräume gebildet werden, in welchen bei Drehung des Läufers ein Viertaktprozess abläuft.

Bei derartigen Kreiskolbenmotoren ist es aus Gewichtsgründen bekannt, das Mantelgehäuse aus Aluminium zu fertigen. Um einen Verschleiß an einer Laufbahn des Trochoidengehäuses aus Aluminium zu reduzieren ist es bekannt, die Laufbahn mit einer verschleißfesten Oberflächenbeschichtung zu versehen. Insbesondere ist es bekannt, eine Nickel-Dispersionsbeschichtung (z. B. Nikasil^{®}) aufzubringen.

JP 62-103424A beschreibt ein Verfahren zur Herstellung eines Mantelgehäuses, wobei ein inertes Einsatzelement in ein Grundmetall aus Aluminiumlegierung eingesetzt wird, wobei das Einsatzelement in eine Bohrung des Grundmetalls eingesetzt und mit Laserstrahlen bestrahlt wird, und wobei das Einsatzelement, das Grundmetall und ein Stahlplattenelement geschmolzen werden.

Aus GB 1 443 928 ist ein Gehäuse für einen Kreiskolbenmotor bekannt, wobei eine Gehäuseoberfläche mit mehreren Auskleidungselementen versehen ist, die aus gekrümmten, flexiblen Metallstreifen, z. B. verchromtem Stahl, bestehen und die jeweils eine Innenfläche haben, die ein Teilstück der trochoidalen Oberfläche bildet, wenn der Streifen im Gehäuse montiert ist.

Aus DE 24 21 240 A ist ein Gehäusemantel für einen Kreiskolbenmotor bekannt, bei dem die Mantellaufbahn aus einer ringförmigen mit dem Gehäusemantel verbundenen Laufbüchse besteht, wobei die Laufbüchse von einem gehärteten Stahlblech gebildet ist, und wobei der Gehäusemantel aus zwei an der Quermittelebene zusammengefügten Hälften besteht und die Hälften miteinander und mit der Laufbuchse verbunden sind.

### AUFGABE UND LÖSUNG

Es ist eine Aufgabe der Erfindung, ein kostengünstiges Verfahren zur Herstellung eines Gehäuses für einen Kreiskolbenmotor zu schaffen, welches den hohen Anforderungen an eine Dichtigkeit zwischen dem Mantelgehäuse und dem Läufer genügt und eine ausreichende Verschleißfestigkeit aufweist. Es sind weitere Aufgaben, ein kostengünstiges, in Serie herstellbares Mantelgehäuse und ein zugehöriges Gehäuse für einen Kreiskolbenmotor zu schaffen.

Gemäß einem ersten Aspekt wird ein Verfahren zum Herstellen eines Gehäuses für einen Kreiskolbenmotor umfassend einen Mantelgehäuse-Grundkörper mit einer Trochoidenlaufbahn geschaffen, wobei eine Buchse aus Hartmetall in den Mantelgehäuse-Grundkörper derart eingepresst wird, dass eine äußere Umfangskontur abdichtend an der Trochoidenlaufbahn anliegt und die Trochoidenlaufbahn mittels der Buchse verkleidet wird, wobei die Buchse eine Ausgangsform mit einer ovalen Umfangskontur aufweist, wobei auf die Buchse beim Einpressen eine Kraft aufgebracht wird, sodass die Buchse elastisch verformt wird und die Umfangskontur abdichtend an der Trochoidenlaufbahn anliegt.

Als Trochoidenlaufbahn wird dabei eine dem Läufer zugewandte Wandung des Mantelgehäuse-Grundkörpers bezeichnet. Die tatsächliche Laufbahn, welche an dem Läufer angeordnete Dichtleisten im Gebrauch berühren, wird durch eine Oberfläche der Buchse gebildet.

Der Mantelgehäuse-Grundkörper wird in Ausgestaltungen in einem Gussverfahren gefertigt. Die eingepresste Buchse aus Hartmetall wird auch als Einpressbuchse bezeichnet. Die Einpressbuchse ist in einer Ausgestaltung aus Edel- oder Werkzeugstahl gefertigt. Beispielsweise ist die Einpressbuchse aus H13 Werkzeugstahl oder 1.2709 Werkzeugstahl gefertigt. Diese Werkzeugstähle zeichnen sich durch eine hohe Verschleißfestigkeit auch bei hohen Temperaturen aus. Die Erfindung ist jedoch nicht auf die Verwendung dieser Werkzeugstähle beschränkt. Ein Material der Buchse ist durch den Fachmann je nach Anwendungsfall, insbesondere auch in Abhängigkeit eines Kraftstoffs, mit welchem ein zugehöriger Kreiskolbenmotor betrieben werden soll, geeignet wählbar.

Dank der Buchse kann auf eine Oberflächenbeschichtung verzichtet werden.

Die Buchse weist eine Ausgangsform mit einer ovalen Umfangskontur auf, wobei auf die Buchse beim Einpressen eine Kraft aufgebracht wird, sodass die Buchse elastisch verformt wird und die Umfangskontur abdichtend an der Trochoidenlaufbahn anliegt. Dies erlaubt eine kostengünstige Fertigung der Buchse in einer Serienproduktion und/oder die Verwendung kostengünstiger Standardbauteile. Dier Erfindung macht sich dabei die überraschende Erkenntnis zu Nutze, dass eine elastische Verformung der Buchse für ein Anliegen der Buchse an der Trochoidenlaufbahn ohne nennenswerten Einfluss auf deren Eigenschaften als Laufbahn für den Läufer ist. Die Buchse wird dabei in einer Ausgestaltung aus einem gestanzten Blech- oder Bandteil gefertigt, welches zu einem Oval verformt und verschweißt wird. In anderen Ausgestaltungen wird die Buchse durch Tiefziehen oder Fließpressen hergestellt. Beim Einpressen wird die Buchse elastisch verformt, sodass diese an der Trochoidenlaufbahn anliegt. Als Ausgangsform der Buchse wird dabei eine Gestaltung der Buchse vor einem Einpressen bezeichnet. Bei der Ausgangsform handelt es sich in Ausgestaltungen wie beschrieben um ein durch Umformen und Schweißen hergestelltes Zwischenprodukt.

Die Buchse ist nicht stoffschlüssig mit dem Mantelgehäuse-Grundkörper verbunden. Bei einem Verschleiß der Buchse kann diese daher von dem Mantelgehäuse-Grundkörper demontiert und runderneuert oder ausgetauscht werden, ohne die Notwendigkeit, den Mantelgehäuse-Grundkörper ebenfalls auszutauschen. In einer Ausgestaltung wird insbesondere auch ein Verfahren zur Herstellung eines wiederaufbereiteten Gehäuses geschaffen, wobei die eingepresste Buchse ausgebaut und durch eine andere Buchse ersetzt wird. Weiter kann in einer Ausgestaltung durch Ausbau und Austausch der Buchse ein zugehöriger Kreiskolbenmotor an verschiedene Kraftstoffe angepasst werden.

Der Mantelgehäuse-Grundkörper ist in einer Ausgestaltung aus Aluminium oder einer Aluminiumlegierung und wird in einem Aluminiumdruckguss-Verfahren gefertigt. Moderne Aluminiumdruckguss-Verfahren erlauben eine präzise Fertigung des Mantelgehäuse-Grundkörpers, sodass eine sichere Verbindung des Mantelgehäuse-Grundkörpers mit der Buchse nach Einpressen der Buchse gewährleistet ist. Je nach Ausgestaltung weist der Mantelgehäuse-Grundkörper Anschlüsse für einen Einlass und/oder einen Auslass und/oder Kanalstrukturen für eine Kühlung auf. Der Mantelgehäuse-Grundkörper ist in einer Ausgestaltung mehrteilig gefertigt, in anderen Ausgestaltungen ist ein einteiliger Mantelgehäuse-Grundkörper vorgesehen.

In einer Ausgestaltung umfasst das hergestellte Gehäuse weiter zwei beidseits des Mantelgehäuses angeordnete Seitenteile, wobei zwischen den Seitenteilen und dem Mantelgehäuse jeweils eine Gleitplatte aus Hartmetall vorgesehen ist. Die Gleitplatten und die Buchse sind in Ausgestaltungen aus einem einheitlichen Material gefertigt. In anderen Ausgestaltungen sind die Gleitplatten und die Buchsen aus unterschiedlichen Materialien gefertigt. In einer Ausgestaltung sind beide Seitenteile als Abschlussplatten gestaltet. In anderen Ausgestaltungen umfasst das Gehäuse mehrere Mantelgehäuse für mehrere Läufer, wobei mindestens ein Seitenteil als Zwischenplatte zwischen zwei Mantelgehäusen gestaltet ist. Die Gleitplatten liegen in einer Ausgestaltung an den Enden der Buchse an, sodass die Buchse und die Gleitplatten eine Dichtlinie für die Arbeitsräume des Kreiskolbenmotors im Gebrauch bilden.

Gemäß einem zweiten Aspekt wird ein Mantelgehäuse für einen Kreiskolbenmotor umfassend einen Mantelgehäuse-Grundkörper mit einer Trochoidenlaufbahn geschaffen, wobei eine Buchse aus Hartmetall in den Mantelgehäuse-Grundkörper so eingepresst ist, dass eine äußere Umfangskontur abdichtend an der Trochoidenlaufbahn anliegt und die Trochoidenlaufbahn mittels der Buchse verkleidet ist, wobei die Buchse eine Ausgangsform mit einer ovalen Umfangskontur aufweist, und die Buchse für eine abdichtente Anlage an der Trochoidenlaufbahn elastisch verformt ist..

Dadurch wird ein Mantelgehäuse geschaffen, bei welchem auf eine Oberflächenbeschichtung verzichtet werden kann.

In einer Ausgestaltung ist vorgesehen, dass die Buchse ohne Zerstörung des Mantelgehäuse-Grundkörpers austauschbar in dem Mantelgehäuse-Grundkörper aufgenommen ist. Bei einem Verschleiß der Buchse kann diese von dem Mantelgehäuse-Grundkörper demontiert werden und durch eine andere Buchse ersetzt oder nach einer Runderneuerung wieder montiert werden.

Der Mantelgehäuse-Grundkörper ist in Ausgestaltungen aus Leichtmetall, insbesondere aus Aluminium oder einer Aluminiumlegierung gefertigt.

Gemäß einem dritten Aspekt wird ein Gehäuse für einen Kreiskolbenmotor umfassend ein Mantelgehäuse, ein Seitenteil und eine Gleitplatte aus Hartmetall geschaffen, wobei die Gleitplatte zwischen dem Seitenteil und dem Mantelgehäuse angeordnet ist.

Die Begriffe "ein", "einer" etc. werden im Zusammenhang mit der Anmeldung als unbestimmte Artikel und nicht als Zählwörter verwendet. Insbesondere ist in Ausgestaltungen vorgesehen, dass zwei Seitenteile vorgesehen sind, welche beidseits des Mantelgehäuses angeordnet sind.

Das Seitenteil und das Mantelgehäuse weisen in Ausgestaltungen einander zugewandte plane Oberflächen auf, an welchen die Gleitplatte anliegt. Die Gleitplatten erlauben dabei im Gebrauch eine sichere Abdichtung der Arbeitsräume des Kreiskolbenmotors sowie eines Ölkreises und verlängern so eine Haltbarkeit des Kreiskolbenmotors.

Durch Ausbau und Austausch der Buchse sowie der zwei Gleitplatten kann ein zugehöriger Kreiskolbenmotor an verschiedene Kraftstoffe angepasst werden. Dadurch wird ein Gehäuse für einen Vielstoffmotor geschaffen, welcher je nach Bedarf mit Benzin, Diesel, Wasserstoff oder anderen Kraftstoffen betreibbar ist.

Ein Material und eine Materialstärke der Gleitplatten sind je nach Anwendungsfall durch den Fachmann geeignet wählbar. Die Gleitplatte weist in einer Ausgestaltung eine Materialstärke von ca. 0,8 mm bis ca. 2.4 mm auf.

### KURZBESCHREIBUNG DER ZEICHNUNGEN

Weitere Vorteile und Aspekte der Erfindung ergeben sich aus den Ansprüchen und aus der Beschreibung eines Ausführungsbeispiels der Erfindung, das nachfolgend anhand der Figuren erläutert ist. Dabei zeigen schematisch:
- Fig. 1: ein Gehäuse eines Kreiskolbenmotors umfassend das Mantelgehäuse, zwei Seitenteile und zwei Gleitplatten in einer Seitenansicht und
- Fig. 2: das Mantelgehäuse gemäß Fig. 1 und einen darin aufgenommenen Läufer in einer perspektivischen Vorderansicht.

### DETAILLIERTE BESCHREIBUNG DER AUSFÜHRUNGSBEISPIELE

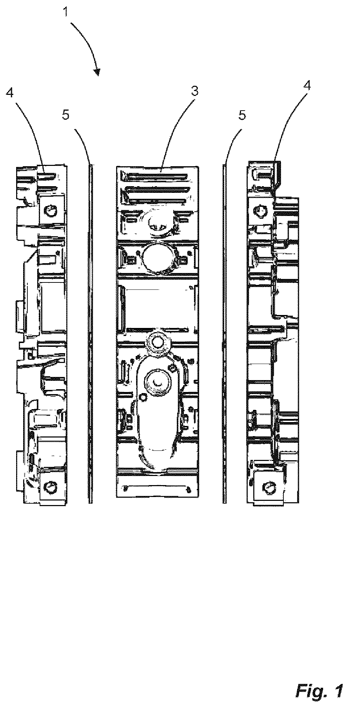

Fig. 1 zeigt ein Gehäuse eines Kreiskolbenmotors umfassend das Mantelgehäuse 3, zwei Seitenteile 4 und zwei zwischen dem Mantelgehäuse 3 und den Seitenteilen 4 angeordnete Gleitplatten 5 in einer Seitenansicht. Die Seitenteile 4 und das Mantelgehäuse 3 weisen in dem dargestellten Ausführungsbeispiel einander zugewandte plane Oberflächen auf, an welchen die Gleitplatten 5 jeweils anliegen.

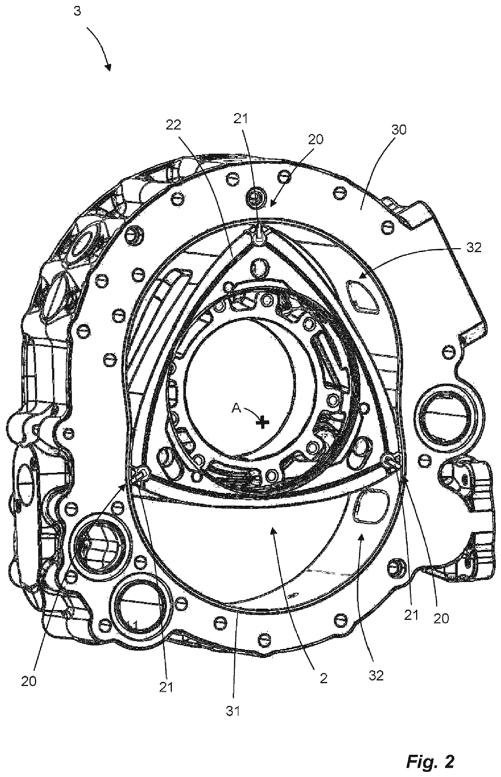

Fig. 2 zeigt schematisch das Mantelgehäuse 3 und einen darin aufgenommenen Läufer 2.

Der in Fig. 2 sichtbare Läufer 2 treibt eine nicht dargestellte Exzenterwelle zu einer Rotation um eine schematisch angedeutete zentrale Achse A an.

Wie in Fig. 2 erkennbar, umfasst das Mantelgehäuse 3 einen Mantelgehäuse-Grundkörper 30 mit einer Trochoidenlaufbahn sowie eine Buchse 31 aus Hartmetall. Die Buchse 31 ist in den Mantelgehäuse-Grundkörper 30 so eingepresst, dass eine äußere Umfangskontur der Buchse 31 abdichtend an der Trochoidenlaufbahn anliegt und die Trochoidenlaufbahn mittels der Buchse verkleidet ist.

Die Buchse 31 bildet in einer Ausgestaltung mit den Gleitplatten 5 gemäß Fig. 1 eine Dichtlinie.

An Kolbenecken 20 des Läufers 2 sind jeweils Dichtleisten 21 vorgesehen, welche an der Oberfläche der Buchse 31 abdichtend anliegen und bei einer Bewegung des Läufers 2 entlang der Oberfläche der Buchse 31 bewegt werden. Weiter sind an den Oberflächen des Läufers 2 Bogenleisten 22 vorgesehen. Die in Fig. 1 dargestellten Gleitplatten 5 dienen als Laufflächen für die Bogenleisten 22, wobei die Bogenleisten 22 abdichtend an den Gleitplatten 5 anliegen.

Mittels der Buchse 31, den Gleitplatten 5, den Dichtleisten 21 und den Bogenleisten 22 werden so drei abgedichtete, wechselnd große Arbeitsräume geschaffen, in welchen bei einer Drehung des Läufers ein Viertaktprozess abläuft.

In dem dargestellten Ausführungsbeispiel sind ein Einlass und ein Auslass jeweils an der Trochoidenlaufbahn des Mantelgehäuses 3 vorgesehen, wobei die Buchse 31 entsprechende Aussparungen 32 aufweist. In anderen Ausgestaltungen ist ein Seiteneinlass und/oder ein Seitenauslass in einem Seitenteil vorgesehen, wobei eine der Gleitplatten 5 mit entsprechenden Aussparungen versehen ist.

Das Mantelgehäuse 3 mit der eingepressten Buchse 31 zeichnet sich durch eine hohe Verschleißfestigkeit aus und erlaubt eine glatte Oberfläche für eine sichere Abdichtung der Arbeitsräume. Durch Verwendung einer Buchse, welche in einer Ausgangsform eine ovale Umfangskontur aufweist und die beim Einpressen in den Mantelgehäuse-Grundkörper 30 elastisch verformt wird, ist eine besonders kostengünstige Fertigung in einer Serienproduktion möglich.

Die Verwendung der Buchse 31 ist auch bei Gestaltungen eines Gehäuses 1 vorteilhaft, welche keine Gleitplatten 5 aufweist und/oder bei welchen Gleitplatten vorgesehen sind, welche in Aussparungen an den Seitenteilen und/oder an dem Mantelgehäuse-Grundkörper aufgenommen sind.

Bei einem Verschleiß der Buchse 31 kann diese ohne Zerstörung des Mantelgehäuse-Grundkörpers 30 demontiert und ausgetauscht werden.

## Patentansprüche

1. Verfahren zum Herstellen eines Gehäuses (1) für einen Kreiskolbenmotor umfassend einen Mantelgehäuse-Grundkörper (30) mit einer Trochoidenlaufbahn, wobei eine Buchse (31) aus Hartmetall in den Mantelgehäuse-Grundkörper (30) derart eingepresst wird, dass eine äußere Umfangskontur der Buchse (31) abdichtend an der Trochoidenlaufbahn anliegt und die Trochoidenlaufbahn mittels der Buchse (31) verkleidet wird, **dadurch gekennzeichnet, dass** die Buchse (31) eine Ausgangsform mit einer ovalen Umfangskontur aufweist, wobei auf die Buchse (31) beim Einpressen eine Kraft aufgebracht wird, sodass die Buchse (31) elastisch verformt wird und die Umfangskontur abdichtend an der Trochoidenlaufbahn anliegt.

2. Verfahren nach Anspruch 1, **dadurch gekennzeichnet, dass** die Buchse (31) bei Schädigung oder Verschleiß ausgetauscht wird.

3. Verfahren nach Anspruch 1 oder 2, **dadurch gekennzeichnet, dass** der Mantelgehäuse-Grundkörper (30) aus Aluminium oder einer Aluminiumlegierung ist und in einem Aluminiumdruckguss-Verfahren gefertigt wird.

4. Verfahren nach einem der Ansprüche 1 bis 3, **dadurch gekennzeichnet, dass** das Gehäuse (1) zwei beidseits des Mantelgehäuses (3) angeordnete Seitenteile (4) aufweist, wobei zwischen den Seitenteilen (4) und dem Mantelgehäuse (3) jeweils eine Gleitplatte (5) aus Hartmetall vorgesehen ist.

5. Mantelgehäuse für einen Kreiskolbenmotor umfassend einen Mantelgehäuse-Grundkörper (30) mit einer Trochoidenlaufbahn, wobei eine Buchse (31) aus Hartmetall in den Mantelgehäuse-Grundkörper (30) so eingepresst ist, dass eine äußere Umfangskontur abdichtend an der Trochoidenlaufbahn anliegt und die Trochoidenlaufbahn mittels der Buchse (31) verkleidet ist, **dadurch gekennzeichnet, dass** die Buchse (31) eine Ausgangsform mit einer ovalen Umfangskontur aufweist, und die Buchse (31) für eine abdichtente Anlage an der Trochoidenlaufbahn elastisch verformt ist.

6. Mantelgehäuse nach Anspruch 5, **dadurch gekennzeichnet, dass** der Mantelgehäuse-Grundkörper (30) aus Leichtmetall, insbesondere aus Aluminium oder einer Aluminiumlegierung gefertigt ist.

7. Mantelgehäuse nach Anspruch 5 oder 6, **dadurch gekennzeichnet, dass** die Buchse (31) ohne Zerstörung des Mantelgehäuse-Grundkörpers (30) austauschbar in dem Mantelgehäuse-Grundkörper aufgenommen ist.

8. Gehäuse für einen Kreiskolbenmotor umfassend ein Mantelgehäuse nach einem der Ansprüche 5 bis 7, ein Seitenteil (4) und eine Gleitplatte (5) aus Hartmetall, wobei die Gleitplatte (5) zwischen dem Seitenteil (4) und dem Mantelgehäuse (3) angeordnet ist.

9. Gehäuse nach Anspruch 8, **dadurch gekennzeichnet, dass** das Seitenteil (4) und das Mantelgehäuse (3) einander zugewandte plane Oberflächen aufweisen, an welchen die Gleitplatte (5) anliegt.

10. Gehäuse nach Anspruch 8 oder 9, **dadurch gekennzeichnet, dass** die Gleitplatte (5) eine Materialstärke von ca. 0,8 mm bis ca. 2.4 mm aufweist.

## Claims

1. Method for producing a housing (1) for a rotary piston engine, comprising a shell housing main body (30) with a trochoidal raceway, wherein a bushing (31) of hard metal is pressed into the shell housing main body (30) in such a manner that an external circumferential contour of the bushing (31) bears in a sealing manner on the trochoidal raceway and the trochoidal raceway is cladded by means of the bushing (31), **characterized in that** the bushing (31) has an initial shape with an oval circumferential contour, wherein when pressing in the bushing (31) a force is applied to it, so that the bushing (31) is elastically deformed and the circumferential contour bears in a sealing manner on the trochoidal raceway.

2. Method according to Claim 1, **characterized in that** the bushing (31) is replaced when damaged or worn.

3. Method according to Claim 1 or 2, **characterized in that** the shell housing main body (30) is of aluminium or an aluminium alloy and manufactured by an aluminium die-casting method.

4. Method according to one of Claims 1 to 3, **characterized in that** the housing (1) has two lateral parts (4) which are disposed on both sides of the shell housing (3), wherein a slide plate (5) of hard metal is provided in each case between the lateral parts (4) and the shell housing (3).

5. Shell housing for a rotary piston engine, comprising a shell housing main body (30) with a trochoidal raceway, wherein a bushing (31) of hard metal is pressed into the shell housing main body (30) in such a way that an external circumferential contour bears in a sealing manner on the trochoidal raceway and the trochoidal raceway is cladded by means of the bushing (31), **characterized in that** the bushing (31) has an initial shape with an oval circumferential contour, and the bushing (31) is elastically deformed for bearing in a sealing manner on the trochoidal raceway.

6. Shell housing according to Claim 5, **characterized in that** the shell housing main body (30) is manufactured from a light metal, in particular from aluminium or an aluminium alloy.

7. Shell housing according to Claim 5 or 6, **characterized in that** the bushing (31) is received in the shell housing main body so as to be replaceable without destroying the shell housing main body (30).

8. Housing for a rotary piston engine, comprising a shell housing according to one of Claims 5 to 7, a lateral part (4), and a slide plate (5) of hard metal, wherein the slide plate (5) is disposed between the lateral part (4) and the shell housing (3) .

9. Housing according to Claim 8, **characterized in that** the lateral part (4) and the shell housing (3) have mutually facing planar surfaces on which the slide plate (5) bears.

10. Housing according to Claim 8 or 9, **characterized in that** the slide plate (5) has a material thickness of approx. 0.8 mm to approx. 2.4 mm.

## Revendications

1. Procédé de fabrication d'un boîtier (1) pour un moteur à piston rotatif comprenant un corps de base de boîtier enveloppant (30) doté d'un chemin de glissement trochoïdal, dans lequel une chemise (31) en métal dur est enfoncée dans le corps de base de boîtier enveloppant (30) de telle sorte qu'un contour circonférentiel extérieur de la chemise (31) s'appuie de manière étanche contre le chemin de glissement trochoïdal et que le chemin de glissement trochoïdal soit revêtu à l'aide de la chemise (31), **caractérisé en ce que** la chemise (31) présente une forme de départ dotée d'un contour circonférentiel ovale, une force étant appliquée sur la chemise (31) lors de l'enfoncement de telle sorte que la chemise (31) soit déformée de façon élastique et que le contour circonférentiel s'appuie de façon étanche contre le chemin de glissement trochoïdal.

2. Procédé selon la revendication 1, **caractérisé en ce que** la chemise (31) est remplacée en cas d'endommagement ou d'usure.

3. Procédé selon la revendication 1 ou 2, **caractérisé en ce que** le corps de base de boîtier enveloppant (30) est constitué d'aluminium ou d'un alliage d'aluminium et est fabriqué selon un procédé de coulage d'aluminium sous pression.

4. Procédé selon l'une des revendications 1 à 3, **caractérisé en ce que** le boîtier (1) présente deux parties latérales (4) disposées de part et d'autre du boîtier enveloppant (3), une plaque de glissement (5) en métal dur étant prévue respectivement entre les parties latérales (4) et le boîtier enveloppant (3).

5. Boîtier enveloppant pour un moteur à piston rotatif comprenant un corps de base de boîtier enveloppant (30) doté d'un chemin de glissement trochoïdal, dans lequel une chemise (31) en métal dur est enfoncée dans le corps de base de boîtier enveloppant (30) de telle sorte qu'un contour circonférentiel extérieur s'appuie de manière étanche contre le chemin de glissement trochoïdal et que le chemin de glissement trochoïdal soit revêtu à l'aide de la chemise (31), **caractérisé en ce que** la chemise (31) présente une forme de départ dotée d'un contour circonférentiel ovale, et la chemise (31) est déformée de façon élastique pour un appui étanche contre le chemin de glissement trochoïdal.

6. Boîtier enveloppant selon la revendication 5, **caractérisé en ce que** le corps de base de boîtier enveloppant (30) est fabriqué à partir de métal léger, en particulier à partir d'aluminium ou d'un alliage d'aluminium.

7. Boîtier enveloppant selon la revendication 5 ou 6, **caractérisé en ce que** la chemise (31) est logée dans le corps de base de boîtier enveloppant de manière remplaçable sans destruction du corps de base de boîtier enveloppant (30).

8. Boîtier pour un moteur à piston rotatif comprenant un boîtier enveloppant selon l'une des revendications 5 à 7, une partie latérale (4) et une plaque de glissement (5) en métal dur, la plaque de glissement (5) étant disposée entre la partie latérale (4) et le boîtier enveloppant (3).

9. Boîtier selon la revendication 8, **caractérisé en ce que** la partie latérale (4) et le boîtier enveloppant (3) présentent des surfaces planes tournées l'une vers l'autre, sur lesquelles la plaque de glissement (5) s'appuie.

10. Boîtier selon la revendication 8 ou 9, **caractérisé en ce que** la plaque de glissement (5) présente une épaisseur de matériau d'environ 0,8 mm à environ 2,4 mm.
